# EUROPEAN PATENT APPLICATION

(11) **EP 4 282 689 A2**
(43) Date of publication of application: **29.11.2023**
(21) Application number: 23174277.6
(22) Date of filing: 19.05.2023
(51) Int. Cl.: B60L 5/32, B29C 64/124, B33Y 80/00

(54) **ADDITIVELY MANUFACTURED MANIFOLD FOR USE IN A PANTOGRAPH**

(30) Priority: 24.05.2022 US 202263345320 P; 09.05.2023 US 202318314424
(71) Applicant: Faiveley Transport Tours, 37701 Saint Pierre des Corps Cedex (FR)
(72) Inventor: De Buretel De Chassey, Henri Guillaume Marie, 37701 Saint-Pierre-des-Corps (FR); Geoffroy, Philippe, 37701 Saint-Pierre-des-Corps (FR); Sama, Santosh Reddy, 37701 Saint-Pierre-des-Corps (FR); Heher, Brett Daniel, 37701 Saint-Pierre-des-Corps (FR)
(74) Representative: Laufhütte, Dieter

(57) **Abstract**

A positioning system for a pantograph includes a manifold. The manifold may have a monolithic body defined by layers of material that are stacked and fused together. The monolithic body may include a housing, a supply pipe, a pantograph pipe, and a valve pipe. The housing may define a chamber to hold a fluid. The supply pipe may project from the housing and be configured for connection to a fluid supply unit. The pantograph pipe may project from the housing and be configured for connection to an expansible device mechanically connected to the pantograph. The valve pipe may have an outlet end projecting from the housing and configured for connection to a main valve that is actuatable to control flow of the fluid through the manifold.

## Description

### CROSS-REFERENCE TO RELATED APPLICATIONS

This application claims priority to U.S. Provisional Patent Application No. 63/345,320, which was filed on May 24, 2022, and the entire disclosure of which is incorporated herein by reference.

### BACKGROUND

### Technical Field.

The subject matter described herein relates to controlling the positioning of pantographs for vehicle power transfer.

### Discussion of Art.

Some vehicles are electrically powered and have pantographs for receiving power from off-board power supply assemblies. The pantograph on a vehicle may have a frame that is extendible for positioning electrical contact strips of the pantograph in physical contact with a catenary power supply line (e.g., overhead line). When the electrical contact strips of the pantograph are in contact with the catenary supply line, electrical power can be transferred between the vehicle and the off-board power supply assembly.

Due to the physical connection between the pantograph onboard the vehicle and the electrified catenary supply line off-board the vehicle, the pantograph and the supply line may become entangled, damaged, excessively worn, and/or the like. To reduce such risks, the vehicles may include positioning systems, often referred to as descent or drop devices, mechanically connected to the pantographs. The function of a descent device is to quickly and automatically drop or retract the pantograph out of contact with the catenary supply line if triggered by a detected abnormal condition, to minimize damage resulting from abnormal condition.

The descent devices may include a pneumatic circuit that uses a fluid to raise or extend the pantograph and releases the fluid to quickly drop or retract the pantograph. Known descent devices are complex assemblies, including a significant number of connected parts. Each connection interface between parts represents a potential leak path that can form over time, reducing the performance and/or efficiency of the descent device. Such known descent devices may require maintenance or even replacement earlier than desired. It may be desirable to have a pantograph positioning system and method that differ from those that are currently available.

### BRIEF DESCRIPTION

In accordance with an embodiment, a positioning system for a pantograph is provided. The positioning system may include a manifold that has a monolithic body defined by layers of material that are stacked and fused together. The monolithic body may include a housing, a supply pipe, a pantograph pipe, and a valve pipe. The housing may define a chamber to hold a fluid. The supply pipe may project from the housing and be configured for connection to a fluid supply unit. The pantograph pipe may project from the housing and be configured for connection to an expansible device mechanically connected to the pantograph. The valve pipe may have an outlet end projecting from the housing and configured for connection to a main valve that is actuatable to control flow of the fluid through the manifold.

In accordance with an embodiment, a positioning system for a pantograph is provided. The positioning system may include a manifold that has a monolithic body defined by layers of material that are stacked and fused together. The monolithic body may include a housing, a supply pipe, and a pantograph pipe. The housing may define a chamber to hold a fluid. The supply pipe may project from the housing and be configured for connection to a fluid supply unit. The pantograph pipe may project from the housing and be configured for connection to an expansible device mechanically connected to the pantograph. In embodiments, the manifold may exclude the valve pipe, with instead there being a direct connection between the distributor and the main valve that does not extend through the manifold.

In accordance with an embodiment, a method of forming a positioning system for a pantograph is provided. The method includes additively manufacturing a manifold by repeatedly depositing layers of material in a stack and fusing the layers of material together to form a monolithic body of the manifold. The monolithic body may include a housing, a supply pipe, a pantograph pipe, and, optionally, a valve pipe. The housing may define a chamber configured to hold a fluid. The supply pipe may project from the housing and be configured for connection to a fluid supply unit. The pantograph pipe may project from the housing and be configured for connection to an expansible device mechanically connected to the pantograph. The valve pipe, if included, may project from the housing and be configured for connection to a main valve that is actuatable to control flow of the fluid through the manifold.

In accordance with an embodiment, a positioning system for a pantograph is provided. The positioning system may include a manifold, an expansible device, a main valve, and a distributor device. The manifold may have a monolithic body defined by layers of material that are stacked and fused together. The monolithic body may include a housing, a supply pipe, a pantograph pipe, and a valve pipe. Each of the supply pipe, the pantograph pipe, and the valve pipe may be seamlessly connected to the housing and projects from the housing. The supply pipe may be configured to be connected to a fluid supply unit for receiving a fluid into the manifold. The expansible device may be fluidly connected via a first hollow member to the pantograph pipe of the manifold. The expansible device may be mechanically connected to the pantograph and may be configured to raise the pantograph as the expansible device expands and lower the pantograph as the expansible device contracts. The main valve may be mounted on a distal end of the valve pipe. The main valve may be actuatable to control flow of the fluid through the manifold. The distributor device may be mounted to an exterior surface of the manifold such that the distributor device is fluidly connected to the chamber, the supply pipe, the pantograph pipe, and the valve pipe.

### BRIEF DESCRIPTION OF THE DRAWINGS

The inventive subject matter may be understood from reading the following description of non-limiting embodiments, with reference to the attached drawings, wherein below:
Figure 1 is a schematic diagram of a power transfer system according to an embodiment;
Figure 2 is a schematic diagram of the power transfer system of Figure 1, showing a leak condition according to an embodiment;
Figure 3 is a perspective view of a pantograph positioning system according to an embodiment;
Figure 4 is an isolated perspective view of a manifold of the pantograph positioning system shown in Figure 3;
Figure 5 is a top-down, plan view of the manifold shown in Figure 3;
Figure 6 shows a back end of the manifold of Figure 3;
Figure 7 shows a right end of the manifold of Figure 3;
Figure 8 is a cross-sectional view of the manifold shown in Figures 3 through 7;
Figure 9 is a front view of a manifold of the pantograph positioning system according to another embodiment; and
Figure 10 is a flow chart of a method for assembling a pantograph positioning system according to an embodiment.

### DETAILED DESCRIPTION

Embodiments of the subject matter described herein relate to a positioning system for a pantograph. The positioning system may include or represent an auto-drop device and/or rapid descent device designed to quickly lower the pantograph. The positioning system includes a manifold that is connected to a distributor device, a main valve, and an expansible device. The expansible device is mechanically connected to the pantograph. Expansion of the expansible device raises or lifts the pantograph towards a catenary power supply line to establish an electrically conductive connection. Compression of the expansible device enables the pantograph to lower or drop away from the catenary supply line. The manifold routes a fluid, such as air, through the distributor device, the main valve, and the expansible device, as explained in more detail herein. For example, in response to a leak event, an outlet aperture opens in the main valve. Fluid within the expansible device is permitted to flow through the manifold and escape into the surrounding environment through the outlet aperture. The escape of fluid from the expansible device allows the pantograph to drop relatively quickly. The positioning system described herein may enable a pantograph to drop at speeds of at least 20 cm per second, such as speeds of 30 cm per second or over 30 cm per second.

In an embodiment, the manifold of the positioning system may be formed as a unitary structure formed from a single piece or body, such that the manifold has a monolithic body. For example, the manifold may be formed as a homogenous single component, rather than a non-homogenous component or a component formed by two or more separate bodies that are then combined with each other. The homogenous component may have the same consistency and/or chemical makeup throughout the entirety or substantially all of the component.

The monolithic body of the manifold may be formed via an additive manufacturing process. The monolithic body may be defined by layers of material that are stacked and fused together. The layers may be sequentially deposited at least partially on top of each other in a build direction, with each layer fusing to the layer below. The aggregate fused layers of the body eventually form a designated structure according to a computer design file. The additive manufacturing can be performed by a three-dimensional printing system, according to instructions in the design file, to produce the monolithic body of the manifold according to the embodiments described herein.

The manifold may include various components that are integral components of the monolithic body. The components include a housing, a supply pipe, a pantograph pipe, and a valve pipe. For example, the housing, the supply pipe, the pantograph pipe, and the valve pipe may be formed together during a single additive manufacturing process. The supply pipe, pantograph pipe, and valve pipe are seamlessly connected to the housing.

The manifold of the positioning system according to the embodiments described herein has several advantages. First, integrating multiple components into a monolithic body of the manifold limits the number of potential leak paths. For example, the housing is seamlessly connected to the supply pipe, rather than coupling the supply pipe to the housing with a gasket, so there is very low risk of a leak forming at an interface between the housing and the supply pipe, even after years of operation. A secondary benefit of integrating multiple components into the monolithic body is a reduction in individual parts used to assemble the positioning system, which may reduce part costs, reduce assembly costs, and may also increase manufacturing efficiency. Another benefit of the manifold described herein is that the manifold has a relatively compact size and is lightweight, without sacrificing performance. The layout of components and flow channels through the manifold is designed to provide enhanced pantograph auto-drop performance in a compact, lightweight form factor. Other benefits of the positioning system are described herein with reference to the associated figures.

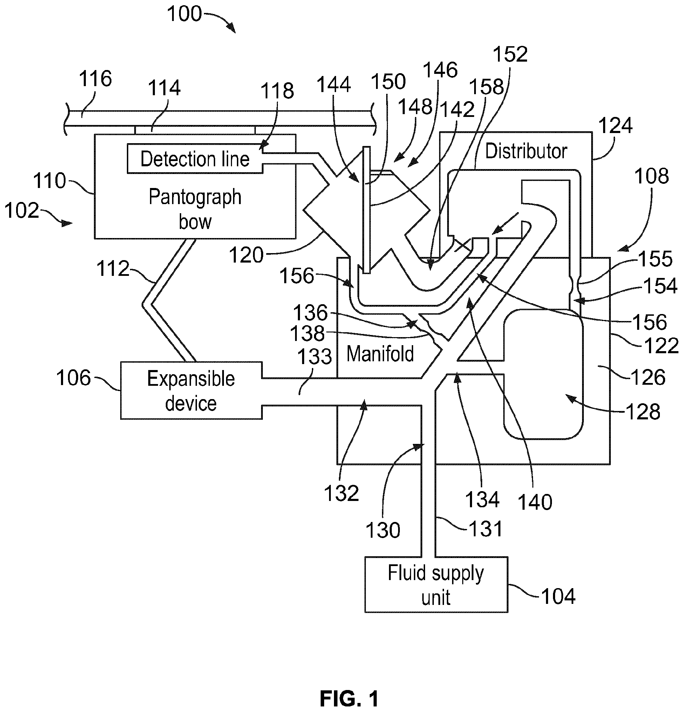

Figure 1 is a schematic diagram of a power transfer system 100 according to an embodiment. The power transfer system may be installed onboard a vehicle. The vehicle may be a rail vehicle (e.g., a locomotive, light rail car, etc.), a bus, a truck, an automobile, or the like. The power transfer system can be used to supply power to the vehicle for propelling movement of the vehicle. For example, the power transfer system may transfer electrical power from an off-board entity to the vehicle for powering the vehicle. The vehicle may be an electric vehicle in which movement of the vehicle is entirely powered by electrical energy conveyed to at least one motor. Alternatively, the vehicle may be a hybrid vehicle that uses electrical energy and another power source, such as an internal combustion engine, to power movement of the vehicle. Optionally, the power transfer system can be used to transfer electrical power in the opposite direction, from the vehicle to the off-board entity. The off-board entity may be a power grid or network, an electrical storage device, another vehicle, or the like.

The power transfer system may include a pantograph 102, a fluid supply unit 104, an expansible device 106, and a positioning system 108. The pantograph may include a bow 110 and an articulated arm 112. The bow includes one or more electrical conductors 114. The electrical conductor(s) may physically contact an electrified element to establish an electrically conductive path between the power transfer system and the off-board entity. The electrical conductor(s) may be referred to as collector shoes. The electrical conductor(s) may be contact strips (e.g., rub strips) that are designed to rub and slide against the electrified element as the vehicle moves relative to the electrified element. In the illustrated embodiment, the electrified element is a catenary line 116. The catenary line may be disposed above (e.g., overhead) the pantograph. For example, the pantograph may be mounted on a roof of the vehicle, and the articulated arm suspends the bow a height above the roof to physically contact the catenary line.

The expansible device is mechanically connected to the articulated arm of the pantograph, and controls the extension of the pantograph. The expansible device may be a pneumatic device that receives a compressed fluid. The compressed fluid may be compressed air or another gas. The expansible device may expand and contract based on the pressure of the fluid within the expansible device. The expansible device may be a cushion, a bellows, or the like. When the expansible device expands, the expansible device forces the articulated arm to extend, pushing the bow farther away from the expansible device. When the expansible device contracts, the bow and articulated arm retract towards the expansible device.

The pantograph bow may include a detection line 118 or circuit that is integrated with the one or more conductors. The detection line is a pneumatic flow path that connects to a main valve 120 of the positioning system. The detection line may represent a portion of the positioning system that is integrated into the pantograph bow. The detection line may be used to determine when the bow, or at least one of the electrical conductors thereon, is damaged or excessively worn. For example, damage or excessive wear of an electrical conductor (contact strip) may form a hole that fluidly connects the detection line to the external (ambient) environment. The fluid within the detection line may leak through the hole, resulting in a pressure drop at the valve. The pressure drop in the detection line triggers the positioning system to quickly retract (e.g., lower) the pantograph. The positioning system may automatically drop the pantograph bow out of an elevated position in contact with the overhead catenary line. When the pantograph retracts, the one or more electrical conductors (contact strips) separate from the catenary line. With the pantograph retracted, there is no electrically conductive path between the power transfer system and the off-board entity.

The positioning system may include the main valve, a manifold 122, and a distributor device 124 (also referred to herein as distributor). The manifold is fluidly connected to each of the expansible device, the fluid supply unit, the distributor, and the valve. The manifold includes a housing 126 which defines a chamber 128 (e.g., a reserve chamber or tank). The manifold includes a set of flow channels that are designed to convey the compressed fluid between the different components to accomplish extending and retracting the pantograph, as described herein. The flow channels extend through the housing.

The flow channels of the manifold may include a supply line 130 that is fluidly connected to the fluid supply unit. The fluid supply unit is a source of compressed fluid. The compressed fluid may be compressed air. The fluid supply unit may be disposed onboard the vehicle, remote from the positioning system. The fluid supply unit may be an air compressor, a tank that contains compressed fluid, or the like. The manifold may be connected to the fluid supply unit by at least a first hollow member 131. The first hollow member(s) may include a hose, a tube, a pipe, or the like, which provides a fluid pathway.

The flow channels may include a first branch or feeder line 132 that branches off the supply line. The first branch line may be connected to the expansible device. For example, some of the compressed fluid that is supplied to the manifold from the fluid supply unit may be directed along the first branch line to the expansible device. The compressed air that is received in the expansible device may serve to expand the expansible device, causing the articulated arm to life or extend the bow. The first branch line is referred to as a pantograph line. The manifold may be connected to the expansible device by at least a second hollow member 133. The second hollow member(s) may include a hose, a tube, a pipe, or the like, which provides a fluid pathway.

The flow channels may include a second branch line 134 that branches off the supply line and connects to the chamber of the manifold. Compressed fluid that is conveyed through the second branch line may at least partially fill the chamber. The second branch line is referred to as a chamber line 134. A third branch line 136 may branch off the supply line to supply compressed fluid to the main valve. The third branch line is referred to as a valve line 136. The valve line may include a restriction 138. The restriction represents a narrow section of the valve line that has a smaller cross-sectional area than other sections of the valve line and other flow channels through the manifold. The restriction may limit the amount (e.g., flow rate) of compressed fluid that is conveyed through the valve line. In an embodiment, the valve line may consistently supply compressed fluid, at a relatively small flow rate, to a pilot chamber of the main valve, regardless of the actuated position of the distributor valve(s). The supply line may proceed along a fourth segment 140 and connect to the distributor. The fourth segment supplies compressed fluid to the distributor, and is referred to as a distributor line 140.

The main valve is actuatable to control flow of the compressed fluid through the manifold and between the components of the pantograph positioning system. In an embodiment, the main valve includes two chambers and a membrane 142 that separates the two chambers. The two chambers include a pilot (or primary) chamber 144 and a secondary chamber 146. The valve includes an outlet aperture 148. The outlet aperture is an opening that is defined along the secondary chamber. The membrane is movable between a closed position and an open position. The membrane is in the closed position in Figure 1. In the closed position, the membrane blocks the outlet aperture. In the open position, the membrane does not block the outlet aperture, allowing compressed fluid to exit the secondary chamber of the main valve into the external environment. In the closed position, the membrane abuts against an edge member 150 of the outlet aperture, sealing the outlet aperture. In the open position, the membrane is dislodged and spaced apart from the edge member, enabling a leak path between the membrane and the edge member.

The distributor is a device that includes one or more distributor valves 152. The manifold may define a control line 154 that extends from the chamber of the manifold to the one or more distributor valves. The control line may include a restriction 155 to limit the flow of compressed fluid through the control line 154. The pressure within the control line may control a distribution setting or position of the distributor valve(s). For example, when the pressure within the control line is below a first threshold pressure value, the one or more distributor valves are set in a first distribution position. In the first distribution position, the distributor directs compressed fluid from the distributor line of the manifold to the pilot chamber of the main valve and blocks compressed fluid from entering the secondary chamber of the main valve. As shown in Figure 1, a pilot inlet line 156 extends from the distributor to the manifold, and through the manifold to the pilot chamber of the main valve. A secondary inlet line 158 extends from the distributor to the manifold, and through the manifold to the secondary chamber of the main valve. In an example application, the first threshold pressure value may be 2.5 bar.

In the first distribution position, the pilot inlet line is open and fluidly connected to the distributor line of the manifold. Compressed fluid from the fluid supply unit is conveyed, through the manifold and the distributor, into the pilot chamber. Some of the compressed fluid received in the pilot chamber flows into the detection line on the pantograph bow. The secondary inlet line is closed or blocked, so no compressed fluid is supplied into the secondary chamber of the valve. At this stage, the pressure within the pilot chamber exceeds the pressure within the secondary chamber, and the pressure differential forces the membrane to remain in the closed position. For example, the greater pressure in the pilot chamber forces the membrane against the edge member of the secondary chamber, sealing/blocking the outlet aperture. The first distribution position may be referred to as a shut out position, because the secondary chamber of the main valve is blocked off by the membrane in the seated position. The compressed fluid supplied to the expansible device, while the distributor is in the shut out position, may cause the expansible device to raise the pantograph towards the overhead line.

In an embodiment, once the pressure within the control line meets or exceeds the first threshold pressure value, the one or more distributor valves of the distributor switch to a second distribution position. In the second distribution position, the secondary inlet line is open and fluidly connected to the distributor line of the manifold. The compressed fluid is directed into the secondary chamber of the main valve, which increases the fluid pressure within the secondary chamber. The pilot inlet line is closed or blocked, so no additional compressed fluid is supplied into the pilot chamber from the distributor. In the second distribution position, the pilot chamber of the main valve may continue to receive a small amount of compressed fluid through the valve line of the manifold, which includes the restriction. The pressure within the pilot chamber may be retained at a constant, or approximately constant, level. Because the pilot chamber is pressurized before the secondary chamber, and the secondary chamber does not receive higher pressure fluid than the pilot chamber, the membrane remains in the closed position seated against the edge member, blocking the outlet aperture. In the second distribution position, the expansible device may continue to receive compressed fluid, and may continue to raise the pantograph towards the overhead line. When the one or more electrical conductors (contact strips) of the bow physically contact the overhead line, the pantograph achieves a deployed position. In the deployed position, the pantograph is connected to the overhead line by an electrically conductive connection.

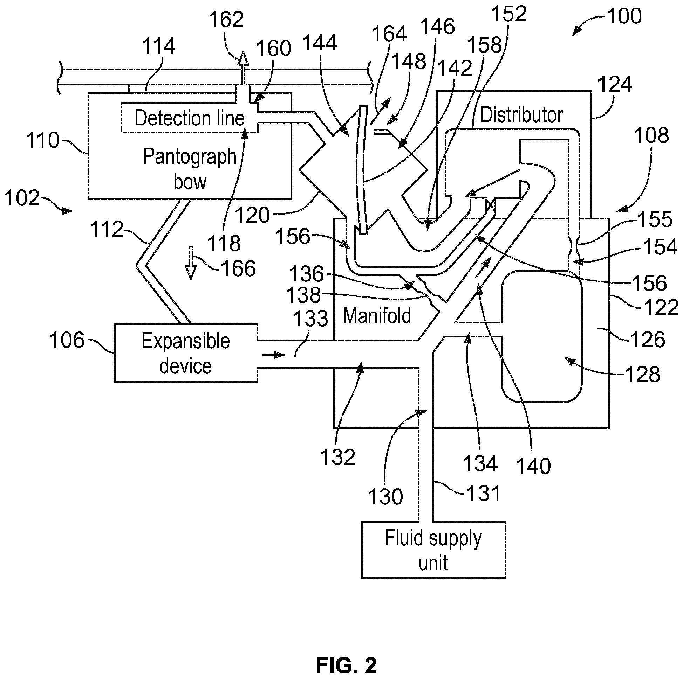

Figure 2 is a schematic diagram of the power transfer system of Figure 1, showing a leak condition according to an embodiment. If the bow experiences damage or excessive wear of at least one electrical conductor, while the distributor is in the second distribution position, a portion of the detection line may be pierced, creating a leak path 160 to the external environment. The formation of the leak path is referred to as a leak event. A leak event allows the compressed fluid within the detection line to escape from the detection line, as represented by the arow 162. The compressed fluid within the detection line may be at a higher pressure than the atmospheric pressure of the external environment, so the compressed fluid diffuses in the direction indicated by the arrow. The pressure in the detection line decreases, which creates a pressure differential across the membrane in the main valve. For example, the pilot chamber is fluidly connected to the detection line. The secondary chamber is not fluidly connected to the detection line, so the pressure in the pilot chamber is less than in the secondary chamber. The membrane is forced out of the seated, closed position towards the lower-pressure pilot chamber. The membrane is dislodged by the pressure differential, which causes the membrane to transition to the open position, opening the outlet aperture. The membrane is shown as curved or bowed in Figure 2, due to the pressure differential. The compressed fluid is emitted from the outlet aperture of the secondary chamber, as represented by the arrow 164.

The opening of the outlet aperture represents a low pressure region within the flow circuit. The low pressure region draws compressed fluid from the expansible device into the manifold and the distributor, before entering the secondary chamber of the main valve. For example, the compressed fluid within the expansible device is directed through the manifold to the distributor. More specifically, the compressed fluid flows within the manifold along the pantograph line and the distributor line. The compressed fluid in the distributor is directed from the distributor back to the manifold within the secondary inlet line. The secondary inlet line feeds the compressed air to the secondary chamber of the main valve. The compressed fluid exits the main valve via the outlet aperture to flow into the external environment.

The expansible device may contract in response to the reduction in internal fluid pressure. The contraction of the expansible device causes retraction of the pantograph, in the direction indicated by arrow 166. For example, the contracting expansible device may pull the articulated arm towards a retracted position, or at least cease supporting the extension of the articulated arm, allowing gravity to lower the pantograph. The pantograph is located closer to the expansible device in the retracted position relative to in the deployed or extended position. The pantograph may drop relatively quickly in order to avoid exacerbation of the wear or damage to the pantograph. The flow channels of the manifold are designed to enable the pantograph to quickly drop in a controlled manner. For example, the fluid channels that form an escape path, through which the compressed flow travels from the expansible device to the secondary chamber of the main valve, may be constructed with relatively large cross-sectional areas to enable unobstructed fluid flow. The broad or large diameter fluid channels may include the first branch line (e.g., feeder line) 132 that connects to the expansible device, the distributor line 140, and the secondary inlet line 158 that connects to the secondary chamber of the main valve. These fluid channels may have larger diameters than other channels of the manifold that do not form the escape path for the compressed fluid, such as the valve line 136, the pilot inlet line 156, the chamber line 134, and the control line 154. The operations of the positioning system are described in more detail in U.S. Patent Application Publication No. 2021/0122245, entitled Rapid Descent Device For A Pantograph, which is incorporated by reference herein in its entirety.

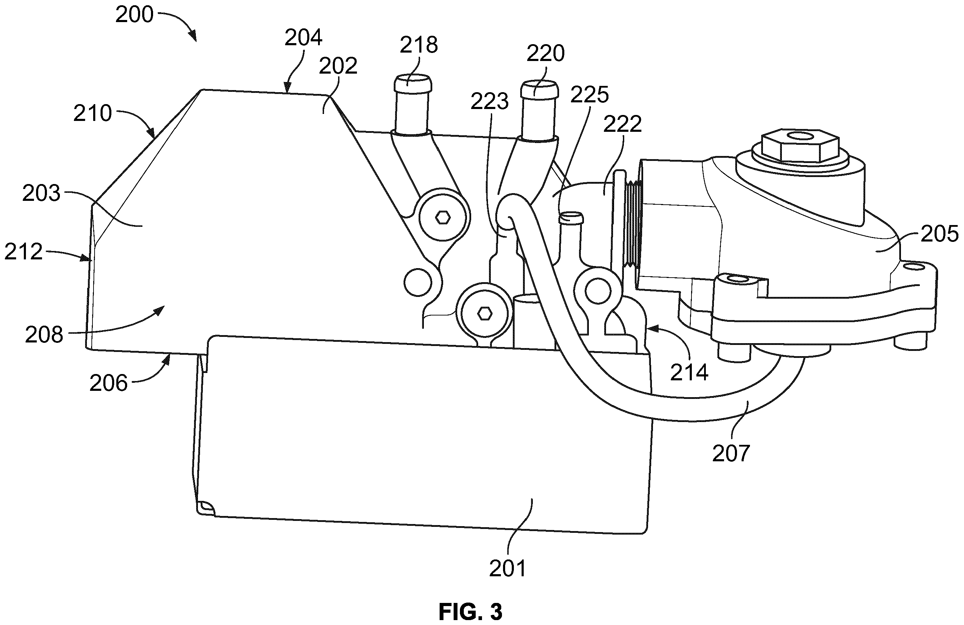

Figure 3 is a perspective view of a pantograph positioning system 200 according to an embodiment. The pantograph positioning system may be the pantograph positioning system shown in Figures 1 and 2. The pantograph positioning system includes a manifold 202, a distributor 201, and a main valve 205. The manifold includes a monolithic (e.g., unitary, one-piece) body 203. The body has a top end 204, a bottom end 206, a front end 208, a back end 210, a left end 212, and a right end 214. These spatial and directional terms are merely used with respect to the orientation shown in the Figure 3, to provide a way to identify different components of the body relative to other components of the body. The manifold body can be inverted, rotated, or otherwise changed, such that the top end is a bottom end, and vice versa, left end becomes right end, and the like.

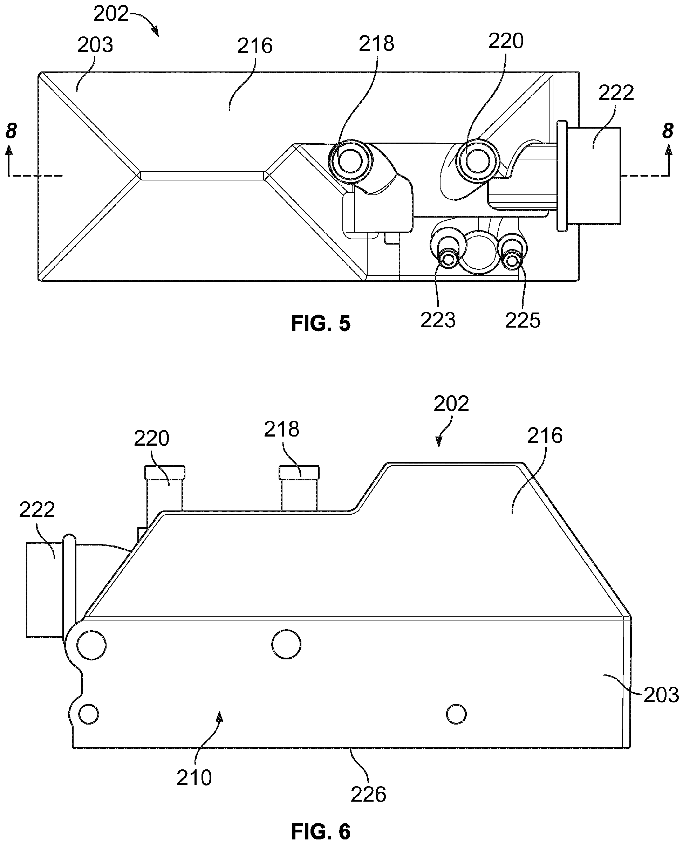

The distributor may be mounted to the manifold along the bottom end of the manifold. For example, an exterior surface 226 of the manifold (shown in Figures 6-8) at the bottom end may abut against the distributor. The main valve may be mounted to the manifold along the right end. In the illustrated embodiment, a hollow connection member 207 is coupled to both the manifold and the main valve. The hollow connection member may be a hose, pipe, tube, or the like. In the illustrated embodiment, the hollow connection member is discrete from the monolithic body of the manifold. For example, a first end of the hollow connection member is coupled to the manifold and a second end of the hollow connection member is coupled to the main valve to provide a flow path between the manifold and the main valve. In an embodiment, the hollow connection member provides the pilot inlet line 156 shown in Figures 1 and 2 which connects to the pilot chamber 144 of the main valve.

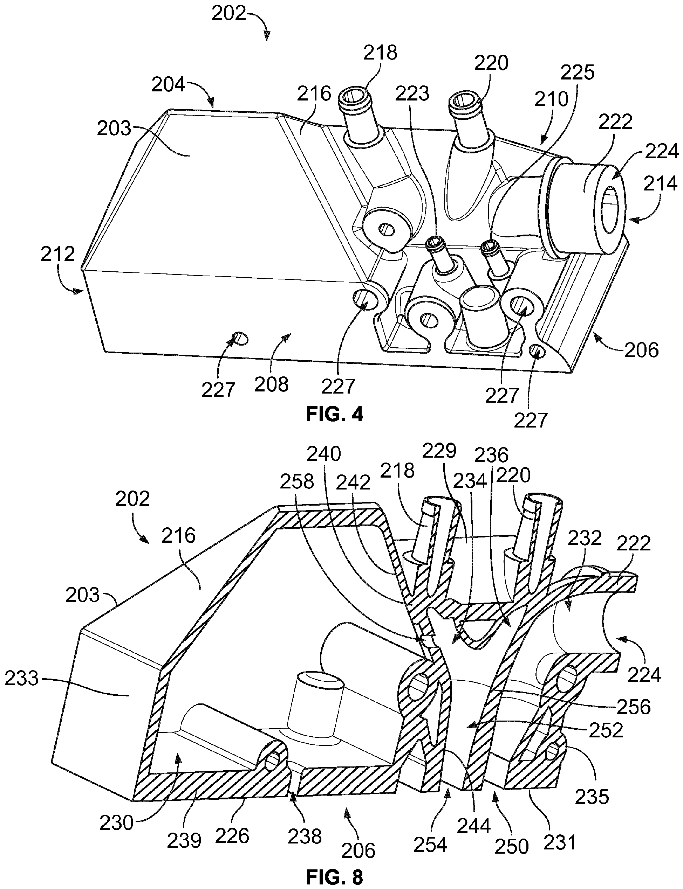

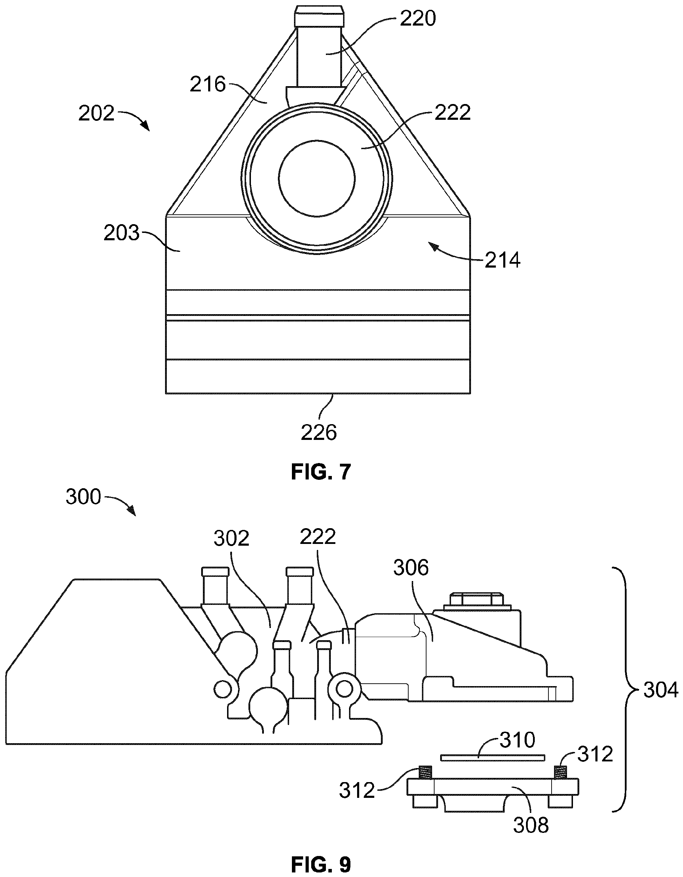

Figure 4 is an isolated perspective view of the manifold of the pantograph positioning system shown in Figure 3. Figure 5 is a top-down, plan view of the manifold shown in Figure 3. Figure 6 shows the back end of the manifold of Figure 3. Figure 7 shows the right end of the manifold of Figure 3. The following description refers to Figures 3 through 7.

The monolithic body of the manifold includes a housing 216, a supply pipe 218, a pantograph pipe 220, a valve pipe 222, and a pilot pipe 223. The supply pipe may connect to the fluid supply unit that supplies compressed fluid to the manifold. For example, the supply pipe may define at least a portion of the supply line 130 through the manifold shown in Figures 1 and 2. The supply pipe may couple to the first hollow member(s) that extend from the manifold to the fluid supply unit. For example, an end of a first hollow member may be fitted on the supply pipe or inserted into the supply pipe. In an embodiment, the supply pipe projects from the housing of the monolithic body.

The pantograph pipe may connect to the expansible device that is mechanically connected to the pantograph. For example, the pantograph pipe may define at least a portion of the pantograph line 132 through the manifold shown in Figures 1 and 2. The pantograph pipe may couple to the second hollow member(s) that extend from the pantograph pipe to the expansible device. Compressed fluid is conveyed from the manifold to the expansible device to expand the expansible device and deploy the pantograph. The compressed fluid may be conveyed in the opposite direction to quickly retract the pantograph in response to a leak event. In an embodiment, the pantograph pipe projects from the housing of the monolithic body. For example, the pantograph pipe and the supply pipe may extend generally upwards from a top side 229 of the housing.

The valve pipe may connect to the main valve. In an embodiment, the valve pipe projects from the housing of the monolithic body. The main valve may be mounted on a distal end 224 of the valve pipe (which is spaced apart from the housing). In an embodiment, the valve pipe may define at least a portion of the secondary inlet line 158 shown in Figures 1 and 2, which connects to the secondary chamber of the main valve. For example, the valve pipe may supply compressed fluid into the secondary chamber of the main valve. When a leak event occurs, compressed fluid from the expansible device may be received at the pantograph pipe and may flow through the manifold to the distributor. The manifold receives the compressed fluid back from the distributor, and the compressed fluid is directed through the valve pipe to the secondary chamber of the main valve, in which the compressed fluid is exhausted through the outlet aperture.

The pilot pipe of the manifold may connect to the pilot chamber of the main valve. For example, the hollow connection member 207 shown in Figure 3 may mount to the pilot pipe to fluidly connect the manifold to the pilot chamber of the main valve. The pilot pipe may define a portion of the pilot inlet line 156 shown in Figures 1 and 2. The pilot pipe projects from the housing of the monolithic body in an embodiment.

Optionally, the manifold may include a sense pipe 225. The sense pipe may fluidly connect to one or more of the fluid channels within the manifold body to allow a sensor to monitor properties within the one of more channels. For example, a pressure sensor, flow sensor, temperature sensor, and/or the like may be mounted to the sense pipe to generate sensor data based on properties within the manifold channels. The sensor data may be used for calibration or the like. Optionally, the manifold may include one or more mounting holes 227 that are integrated into the monolithic body. The mounting holes may be positioned and sized to receive fasteners therein for mounting the manifold to a support structure. The support structure may be a portion of a vehicle.

The monolithic body of the manifold includes at least the housing, the supply pipe, the pantograph pipe, the valve pipe, and the pilot pipe integrated as a single, unitary structure. For example, the supply pipe, the pantograph pipe, the valve pipe, and the pilot pipe may each be seamlessly connected to the housing. These components may be formed together during a single manufacturing process. As a result, the monolithic body of the manifold is a homogenous single component, rather than a non-homogenous component or a component formed by two or more separate bodies that are then combined with each other. The monolithic body may have the same consistency and/or chemical makeup throughout the entirety or substantially all of the structure.

The monolithic body of the manifold may be formed via an additive manufacturing process (e.g., three-dimensional printing process). The monolithic body may be defined by layers of material that are stacked and fused together. The layers may be sequentially deposited at least partially on top of each other in a build direction, with each layer fusing to the layer below. The layers may be stacked on a build plate or platform of an additive manufacturing system. The aggregate fused layers of the body eventually form a designated structure for the manifold according to a computer design file. The additive manufacturing can be performed by a three-dimensional printing system, according to instructions in the design file, to produce the monolithic body of the manifold shown in Figures 3 through 7.

Suitable additive manufacturing processes may include, for example, laser powder bed fusion, electron beam powder bed fusion, directed energy deposition (DED), and binder jetting. Laser powder bed fusion involves depositing a layer of powder on a build plate and fusing selective portions of the powder using a ytterbium fiber laser that scans a computer-aided design (CAD) pattern. Laser powder bed fusion may include selective laser melting or sintering. At least portions of the monolithic body could be printed using DED, which prints at a very fast rate. For example, DED could be used to print the housing of the manifold, which could then be fused directly with the more intricate pipes that extend from the housing. Binder jetting creates a part by intercalating metal powder and polymer binding agent that bind the particles and layers together without the use of laser heating. The material of the monolithic body may be selected based at least in part on the proposed method of additive manufacturing. For example, the binder jet materials that include the binder and the metal (or ceramic, or cermet) may make the green form (e.g., the shape prior to sintering). The green form might be in the final shape, or may be shaped so that the sintered form is the final shape.

In an embodiment, the monolithic body of the manifold includes a metal material. For example, the layers of material that are stacked and fused together during the build process include the metal material. The metal material may be in the form of powder, a filament, or the like. The metal material may include or represent aluminum alloys, titanium alloys, cobalt chrome alloys, stainless steel, nickel alloys, or the like. Optionally, the monolithic body may include at least one plastic or ceramic material in addition to, or instead of, the metal material.

Figure 8 is a cross-sectional view of the manifold shown in Figures 3 through 7. The cross-section is taken along line 8-8 shown in Figure 5. The monolithic body includes a chamber 230 within the housing that is used to store compressed fluid, at least temporarily. The chamber may represent the chamber of the manifold shown in Figure 1. The cross-section extends through the chamber, the supply pipe, the pantograph pipe, and the valve pipe. The cross-section does not extend through the pilot pipe or the sense pipe, which are not shown in Figure 8. The monolithic body may define several flow channels therethrough.

The housing laterally extends from a first lateral side 233 to a second lateral side 235. The first lateral side may be disposed along the first lateral end (e.g., left end) of the manifold, and the second lateral side may be disposed along the second lateral end (e.g., right end) of the manifold. The housing vertically extends from the top side 229 to a bottom side 231. The bottom side may define the bottom end of the manifold. The chamber may be positioned at or proximate to the first or left lateral side. The valve pipe, the supply pipe, and the pantograph pipe may be positioned at or proximate to the second or right lateral side.

The flow channels include a first flow channel 232 that is fluidly connected to the valve pipe. The first flow channel extends from the distal end of the valve pipe to an opposite, inlet end 250 along the bottom end of the manifold, which is fluidly connected to the distributor. The first flow channel may define the secondary inlet line 158 shown in Figures 1 and 2. The end of the first flow channel along the bottom defines the inlet end 250 that receives compressed fluid to supply the secondary chamber of the main valve. The flow channels may include a second flow channel 234 that is fluidly connected to the supply pipe, and a third flow channel 236 that is fluidly connected to the pantograph pipe. in the illustrated orientation, the supply pipe and the second flow channel are disposed to the left of the pantograph pipe and the third flow channel. In an alternative embodiment, the supply pipe and the second flow channel may be disposed to the right of, in front of, and/or behind the pantograph pipe and the third flow channel.

The second and third flow channels merge within the monolithic body to define a combined flow channel 252. The combined flow channel extends to an outlet end 254 that is for fluid attachment to the distributor. The outlet end 254 of the combined flow channel 252 is discrete and separate from the inlet end 250 of the first flow channel 232, being separated by a wall 256 along the length of the channels within the manifold. The first flow channel is fluidly isolated, via the wall, from the second flow channel, the third flow channel, and the combined flow channel throughout the interior of the manifold. The first, second, third, and combined flow channels may be positioned adjacent to the chamber in a directed towards the second (or right) lateral side of the housing.

In the illustrated embodiment, the combined flow channel is disposed below the second and third flow channels, where below is relative to a direction extending from the top side of the housing towards the bottom side of the housing. The second and third flow channels are disposed more towards the top side, and the combined flow channel is disposed more towards the bottom side. A longitudinal axis of the combined flow channel, proximate to the bottom side of the housing, may be generally parallel (e.g., plus or minus 5 degrees) to respective longitudinal axes of the second flow channel and the third flow channel, proximate to the top side of the housing. As such, the manifold reflects a lack of major bends or other flow impediments from the second and third flow channels to the combined flow channel, and to the distributor device fluidly connected to the outlet end thereof. The inlet end of the valve pipe (e.g., the first flow channel) and the outlet end of the combined flow channel represent fluidly isolated openings along the bottom side of the housing.

In an embodiment, the distal end of the valve pipe extends out the second (e.g., right) lateral side 235 along the right end of the manifold. A longitudinal axis of the valve pipe along the distal end may be oriented generally laterally or transverse (e.g., perpendicular plus or minus 30 degrees) relative to respective longitudinal axes of the combined flow channel, the second flow channel, and the third flow channel within the manifold. The first flow channel, defined in part by the valve pipe, may be positioned at the second (or right) lateral side of the housing adjacent to the second flow channel, the third flow channel, and/or the combined flow channel.

The flow channels may include a chamber outlet port 238 that extends through a wall of the housing into the chamber. The chamber outlet port, in the illustrated embodiment, is disposed along a bottom wall 239 of the monolithic body at the bottom end. The chamber outlet port connects the chamber to the distributor, such that fluid from an interior of the chamber can flow through the chamber outlet port along the bottom side of the housing to the distributor. The chamber outlet port may define the control line 154 shown in Figures 1 and 2. When the distributor is mounted to the manifold along the bottom end, the chamber outlet port, the inlet end of the first fluid channel, and the outlet end of the second fluid channel may align with different corresponding openings of the distributor. When mounted to the distributor, compressed fluid is transferred between the manifold and the distributor through the flow channels.

In the illustrated embodiment, the housing of the monolithic body includes at least one interior wall. A first interior wall 240 is disposed between the chamber and the second and third flow channels, which merge to form the combined flow channel. The first interior wall has a first side 242 and a second side 244 that is opposite the first side. The chamber of the housing is located on the first side of the interior wall in the illustrated embodiment, and the various pipes and associated flow channels, are located on the second side of the interior wall. In an embodiment, an aperture (e.g., channel) 258 is defined through a thickness of the first interior wall. The aperture fluidly connects the chamber to the first flow channel, the second flow channel, and/or the combined flow channel. In the illustrated embodiment, the aperture is directly connected to the second flow channel. The aperture may define the chamber line 134 shown in Figures 1 and 2. Some of the compressed fluid that is received into the manifold via the supply pipe may flow through the aperture into the chamber to fill the chamber and supply fluid through the chamber outlet port.

Although not shown in the illustrated cross-section, the pilot pipe 223 shown in Figure 4 may define a corresponding pilot flow channel through the interior of the manifold. The pilot flow channel may define the pilot inlet line 156 shown in Figures 1 and 2. The pilot flow channel may be fluidly connected to the second flow channel and/or the merged flow channel via an opening or hollow segment that defines the valve line 136 shown in Figures 1 and 2. The pilot flow channel may extend from the distal end of the pilot pipe through the manifold to an inlet port at the bottom end of the manifold. The inlet port may be fluidly connected to the distributor via a corresponding fluid connection point of the distributor that is discrete and spaced apart from the other fluid connection points of the distributor. For example, the inlet port of the pilot flow channel is isolated from the other ports 238, 254, 250 that connect to the distributor. In the illustrated embodiment, the manifold may define at least four discrete fluid connection points with the distributor, as generically illustrated in Figures 1 and 2.

In an alternative embodiment, the manifold may lack the valve pipe and the first flow channel. For example, the distributor device may be directly coupled to the main valve to define a direct fluid connection from the distributor device to the main valve without extending through the manifold.

A technical effect of forming the manifold as a monolithic body via additive manufacturing is an ability to achieve irregular shapes and contours. For example, the flow channels may be designed to reduce the distance that compressed fluid from the expansible device has to traverse within the manifold before being emitted from the outlet aperture of the main valve. The flow channels may have curved contours, which may enable greater fluid flow rate through the manifold relative to harder, more angular contours. The result achieved is a relatively quick automated drop or retraction of the pantograph in response to occurrence of a leak event in the detection line. The positioning system enables the pantograph to drop in excess of a regulated requirement within one second of the leak event, such as 1.5 times the required distance. For example, the positioning system may drop the pantograph at least 30 cm within one second of the leak event, such as at least 35 cm within one second.

The monolithic body of the manifold according to an embodiment may have a compact size. The volume of the chamber in the housing may be less than 0.5 L, and optionally no greater than 0.3 L. The compact size may beneficially limit the weight of the manifold, reducing overall vehicle weight. In an embodiment, the monolithic body may weigh less than 1 kg, and optionally may weigh less the 0.5 kg.

Forming the monolithic body of the manifold avoids the collection and assembly of several discrete individual parts, which may reduce costs and increase manufacturing efficiency. Furthermore, the monolithic body reduces the risk of leaks forming at interfaces between different components that are assembled together, because there are few such interfaces. The layout of the manifold provides enhanced pantograph auto-drop performance in a compact, lightweight form factor.

Figure 9 is a front view of a manifold 300 of the positioning system according to another embodiment. The manifold has a monolithic body 302. The monolithic body of the manifold in Figure 9 includes a portion of a main valve 304. The main valve may perform the same operations as the main valve shown in Figures 1 and 2. The main valve is shown in an exploded view in Figure 9. The main valve includes a first housing portion 306, a second housing portion 308, and a membrane 310 (or diaphragm). In the illustrated embodiment, the first housing portion of the main valve is integrally connected to the valve pipe. For example, the first housing portion of the main valve is an integrated part of the monolithic body of the manifold. The first housing portion may be additively manufactured during a common build process with the remainder of the monolithic body. After the monolithic body is formed, the main valve may be assembled by coupling the second housing portion to the first housing portion. The membrane is encased between the coupled housing portions. The housing portions may be coupled via fasteners 312, such as bolts, clips, latches, or the like. Optionally, the first housing portion may define the secondary chamber of the main valve shown in Figures 1 and 2, and the second housing portion may define the pilot chamber. The hollow connection member 207 shown in Figure 3 may couple to the second housing portion.

Integrating the first housing portion of the main valve onto the end of the valve pipe may reduce the number of parts of the positioning system and the number of connections that are made during the assembly process, by at least one. Optionally, other components may be integrated onto the monolithic body of the manifold. For example, a portion of the distributor may be formed as part of the monolithic body.

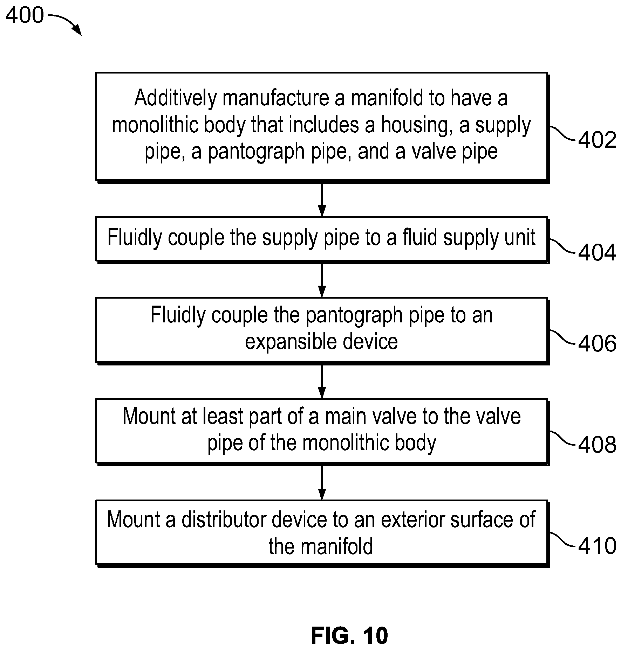

Figure 10 is a flow chart of a method 400 for assembling a pantograph positioning system according to an embodiment. The positioning system may extend and retract the pantograph relative to a vehicle. The pantograph may be mounted on the vehicle. Alternatively, the pantograph may be mounted to an off-board power system, and extends from the off-board system towards a vehicle to contact the vehicle. The method may be performed to achieve the positioning system shown in Figures 1 and 2. The method optionally may include more steps than shown in Figure 10, fewer steps than shown in Figure 10, and/or different steps than shown in Figure 10. Furthermore, the order of the steps presented in Figure 10 may be rearranged unless explicitly stated and unless such a rearranged order would not be practically feasible.

At step 402, a manifold is additively manufactured to have a monolithic body that includes a housing, a supply pipe, a pantograph pipe, and a valve pipe. The manifold is additively manufactured by repeatedly depositing layers of material in a stack and fusing the layers of material together to form the monolithic body. The layers of material that are stacked and fused together may include a metal material. The manifold may be additively manufactured on a build plate of an additive manufacturing system that automates the build process. The housing of the monolithic body is formed to define a chamber that may hold a fluid (e.g., a compressed fluid). The supply pipe, the pantograph pipe, and the valve pipe project from the housing. The supply pipe, the pantograph pipe, and the valve pipe may be seamlessly connected to the housing.

In an embodiment, additively manufacturing the manifold may include forming at least one interior wall of the housing to fluidly isolate the chamber from the supply pipe, the pantograph pipe, and the valve pipe along the manifold. An interior wall of the housing may be formed such that the chamber is located on a first side of the interior wall and the supply pipe, the pantograph pipe, and the valve pipe are located on a second side of the interior wall. Optionally, the manifold may be additively manufactured such that the manifold weighs no more than 0.5 kg, and the chamber has a volume no greater than 0.5 L.

At step 404, the supply pipe is fluidly coupled to a fluid supply unit. The fluid supply unit is a source of compressed fluid. The supply pipe may be coupled to the fluid supply unit via one or more (first) hollow members. The manifold may receive the compressed fluid through the hollow member(s).

At step 406, the pantograph pipe is fluidly coupled to an expansible device. The expansible device may be mechanically connected to the pantograph. The expansible device may raise the pantograph as the expansible device expands and lower the pantograph as the expansible device contracts. The pantograph pipe may be coupled to the expansible device via one or more (second) hollow members.

At step 408, at least part of a main valve is mounted to the valve pipe. The main valve is actuatable to control flow of the compressed fluid through the manifold. In an embodiment, the main valve is a discrete component that is assembled and then mounted to a distal end of the valve pipe. In an alternative embodiment, additively manufacturing the manifold at step 402 may include forming a first housing portion of the main valve at a distal end of the valve pipe such that the first housing portion of the main valve is part of the monolithic body of the manifold. The method may include coupling the first housing portion to a second housing portion of the main valve to enclose a membrane of the main valve.

At step 410, a distributor device is mounted to the manifold, along an exterior surface of the monolithic body. The distributor device may be mounted to the manifold to be fluidly connected to the chamber, the supply pipe, the pantograph pipe, and the valve pipe. The distributor device may include one or more distributor valves that control the supply of compressed fluid to different chambers of the main valve. The distributor device may be actuatable based on a pressure in a control line received from the chamber of the manifold.

The vehicle associated with the power transfer system described herein may be a rail vehicle (e.g., a locomotive), a truck (e.g., highway semi-truck, mining truck, logging truck, or the like), bus, van, car, water vessel (e.g., tug, barge), and the like. Some suitable vehicles may have electric drive systems, which may be powered (when using on-board power) using fuel cells or batteries. In one embodiment, the overhead line shown in Figures 1 and 2 is a component of a charging station for an electric vehicle.

In an embodiment, a positioning system for a pantograph includes a manifold. The manifold has a monolithic body defined by layers of material that are stacked and fused together. The monolithic body includes a housing, a supply pipe, a pantograph pipe, and a valve pipe. The housing defines a chamber configured to hold a fluid. The supply pipe projects from the housing and is configured for connection to a fluid supply unit. The pantograph pipe projects from the housing and is configured for connection to an expansible device mechanically connected to the pantograph. The valve pipe has an outlet end that projects from the housing and is configured for connection to a main valve that is actuatable to control flow of the fluid through the manifold.

Optionally, the positioning system includes the expansible device, and the pantograph pipe is connected to the expansible device. The expansible device may raise the pantograph as the expansible device expands and may lower the pantograph as the expansible device contracts. Optionally, the positioning system includes a distributor device mounted to the manifold. The distributor device may be fluidly connected to the chamber, the supply pipe, the pantograph pipe, and the valve pipe.

The positioning system may include the main valve, which is connected to the valve pipe. The main valve may open during a leak event due to a pressure differential, for fluid from the expansible device to be conveyed through the pantograph pipe and the valve pipe out of an outlet aperture of the main valve, causing the expansible device to contract and retract the pantograph. Optionally, during the leak event, fluid from the expansible device may be conveyed through the pantograph pipe and through the manifold body to a distributor device and then through the valve pipe out of the outlet aperture of the main valve.

The positioning system may include the main valve, and the valve pipe may extend from the housing to a first housing portion of the main valve that is integrally connected to the valve pipe, such that the first housing portion of the main valve is part of the monolithic body of the manifold. The first housing portion may be coupled to a second housing portion of the main valve to enclose a membrane of the main valve.

Optionally, the monolithic body includes at least one interior wall between the chamber and the supply pipe and/or the pantograph pipe along the manifold. The monolithic body may include an interior wall of the housing. The chamber may be located on a first side of the interior wall. The supply pipe, the pantograph pipe, and the valve pipe may be located on a second side of the interior wall. Optionally, the manifold weighs no more than 1 kg. The layers of material that are stacked and fused together may include or represent a metal material. Optionally, a volume of the chamber is no greater than 0.5 L.

Optionally, the valve pipe may define a first flow channel within the housing extending from the outlet end of the valve pipe to an inlet end of the valve pipe. The supply pipe may be fluidly connected to a second flow channel within the housing. The pantograph pipe may be fluidly connected to a third flow channel within the housing. The second flow channel and the third flow channel may merge within the housing into a combined flow channel positioned below the second and third flow channels. The term "below" may be relative to a direction extending from a top side of the housing towards a bottom side of the housing, where the second and third flow channels are located more towards the top side and the combined flow channel is location more towards the bottom side. The combined flow channel may define an outlet end for fluid attachment to a distributor device. A longitudinal axis of the combined flow channel may be generally parallel (e.g., plus or minus 5 degrees) to respective longitudinal axes of the second flow channel and the third flow channel, which reflects or indicates a lack of major bends or other flow impediments from the second and third flow channels to the combined flow channel. Optionally, the first flow channel, within the housing, may be fluidly isolated from the second flow channel, the third flow channel, and the combined flow channel. The inlet end of the valve pipe and the outlet end of the combined flow channel may define fluidly isolated openings on a bottom side of the housing. The supply pipe and the pantograph pipe may extend upwards from a top side of the housing. The outlet end of the valve pipe may extend out a first lateral side of the housing. A longitudinal axis of the outlet end may be generally laterally oriented (e.g., perpendicular plus or minus 30 degrees) relative to the respective longitudinal axes of the combined flow channel and the second flow channel and the third flow channel. Optionally, the housing may extend from the first lateral side to a second lateral side, and the chamber may be positioned at the second lateral side of the housing. The second flow channel, the third flow channel, and the combined flow channel may be positioned adjacent to the chamber in a direction towards the first lateral side of the housing. The manifold may include an aperture between the chamber and one of the second flow channel, the third flow channel, or the combined flow channel for fluidly connecting the chamber to said one of the second flow channel, the third flow channel, or the combined flow channel. The first flow channel may be positioned at the first lateral side of the housing adjacent to at least one of the second flow channel, the third flow channel, or the combined flow channel. Optionally, the manifold includes a chamber outlet port extending from an interior of the chamber through to the bottom side of the housing.

Optionally, relative to the view of Figure 8, the supply pipe and second flow channel may be located on the right, and the pantograph pipe and the third flow channel are located on the left. Alternatively, the supply pipe and the second flow channel may be located on the left, and the pantograph pipe and the third flow channel are located on the right.

In an embodiment, a positioning system for a pantograph includes a manifold. The manifold has a monolithic body defined by layers of material that are stacked and fused together. The monolithic body including a housing, a supply pipe, and a pantograph pipe. The housing defines a chamber configured to hold a fluid. The supply pipe projects from the housing and is configured for connection to a fluid supply unit. The pantograph pipe projects from the housing and is configured for connection to an expansible device mechanically connected to the pantograph.

Optionally, in other embodiments, the manifold may exclude the valve pipe, with instead there being a direct connection between the distributor and the main valve that does not extend through the manifold.

Optionally, the monolithic body may include a valve pipe. The valve pipe may have an outlet end projecting from the housing and configured for connection to a main valve that is actuatable to control flow of the fluid through the manifold.

In an embodiment, a method of forming a positioning system for a pantograph includes additively manufacturing a manifold by repeatedly depositing layers of material in a stack and fusing the layers of material together to form a monolithic body of the manifold. The monolithic body includes a housing, a supply pipe, a pantograph pipe, and, optionally, a valve pipe. The housing defines a chamber configured to hold a fluid. The supply pipe projects from the housing and is configured for connection to a fluid supply unit. The pantograph pipe projects from the housing and is configured for connection to an expansible device mechanically connected to the pantograph. The valve pipe, if included, projects from the housing and is configured for connection to a main valve that is actuatable to control flow of the fluid through the manifold.

Optionally, the method includes connecting the expansible device to the pantograph pipe. The expansible device may be configured to raise the pantograph as the expansible device expands and lower the pantograph as the expansible device contracts. Optionally, the method includes fluidly coupling the supply pipe to the fluid supply unit via at least a first hollow member, fluidly coupling the pantograph pipe to the expansible device via at least a second hollow member, and mounting at least part of the main valve to the valve pipe to fluidly couple the valve pipe to the main valve. Optionally, the method includes mounting a distributor device to the manifold, along an exterior surface of the monolithic body, such that the distributor device is fluidly connected to the chamber, the supply pipe, the pantograph pipe, and the valve pipe.

Optionally, the manifold is additively manufactured on a build plate of an additive manufacturing system. Additively manufacturing the manifold may include forming a first housing portion of the main valve at a distal end of the valve pipe such that the first housing portion of the main valve is part of the monolithic body of the manifold. The method may include coupling the first housing portion to a second housing portion of the main valve to enclose a membrane of the main valve. Optionally, additively manufacturing the manifold may include forming at least one interior wall of the housing to fluidly isolate the chamber from the supply pipe, the pantograph pipe, and the valve pipe along the manifold. Additively manufacturing the manifold may include forming an interior wall of the housing such that the chamber is located on a first side of the interior wall. The supply pipe, the pantograph pipe, and the valve pipe may be located on a second side of the interior wall. Optionally, the manifold is additively manufactured such that the manifold weighs no more than 0.5 kg and the chamber has a volume no greater than 0.5 L. The layers of material that are stacked and fused together may include a metal material.

In an embodiment, a positioning system for a pantograph includes a manifold, an expansible device, a main valve, and a distributor device. The manifold has a monolithic body defined by layers of material that are stacked and fused together. The monolithic body includes a housing, a supply pipe, a pantograph pipe, and a valve pipe. Each of the supply pipe, the pantograph pipe, and the valve pipe is seamlessly connected to the housing and projects from the housing. The supply pipe is configured to be connected to a fluid supply unit for receiving a fluid into the manifold. The expansible device is fluidly connected via a first hollow member to the pantograph pipe of the manifold. The expansible device is mechanically connected to the pantograph and configured to raise the pantograph as the expansible device expands and lower the pantograph as the expansible device contracts. The main valve is mounted on a distal end of the valve pipe, and is actuatable to control flow of the fluid through the manifold. The distributor device is mounted to an exterior surface of the manifold such that the distributor device is fluidly connected to the chamber, the supply pipe, the pantograph pipe, and the valve pipe.

Optionally, responsive to a leak event, the main valve is configured to open an outlet aperture of the main valve, based on a pressure differential in the main valve. Fluid from the expansible device may be conveyed through the pantograph pipe, the distributor device, and the valve pipe out of the outlet aperture, causing the expansible device to contract and retract the pantograph. Optionally, the housing defines a chamber that is fluidly connected to the distributor device, and is configured to contain fluid from the fluid supply unit.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A positioning system for a pantograph, the positioning system comprising:
a manifold comprising a monolithic body defined by layers of material that are stacked and fused together, the monolithic body including a housing, a supply pipe, a pantograph pipe, and a valve pipe, the housing defining a chamber configured to hold a fluid, the supply pipe projecting from the housing and configured for connection to a fluid supply unit, the pantograph pipe projecting from the housing and configured for connection to an expansible device mechanically connected to the pantograph, the valve pipe having an outlet end projecting from the housing and configured for connection to a main valve that is actuatable to control flow of the fluid through the manifold.

2. The positioning system of claim 1, further comprising the expansible device, wherein the pantograph pipe is connected to the expansible device, and wherein the expansible device is configured to raise the pantograph as the expansible device expands and lower the pantograph as the expansible device contracts.

3. The positioning system of claim 1, further comprising the main valve, wherein the main valve is connected to the valve pipe, and wherein the main valve is configured to open during a leak event due to a pressure differential, for fluid from the expansible device to be conveyed through the pantograph pipe and the valve pipe out of an outlet aperture of the main valve, causing the expansible device to contract and retract the pantograph.

4. The positioning system of claim 3, wherein during the leak event, fluid from the expansible device is conveyed through the pantograph pipe and through the manifold body to a distributor device and then through the valve pipe out of the outlet aperture of the main valve.

5. The positioning system of claim 1, further comprising the main valve, wherein the valve pipe extends from the housing to a first housing portion of the main valve that is integrally connected to the valve pipe such that the first housing portion of the main valve is part of the monolithic body of the manifold, the first housing portion configured to be coupled to a second housing portion of the main valve to enclose a membrane of the main valve.

6. The positioning system of claim 1, wherein the monolithic body includes an interior wall of the housing, wherein the chamber is located on a first side of the interior wall, and the supply pipe, the pantograph pipe, and the valve pipe are located on a second side of the interior wall.

7. The positioning system of claim 1, wherein a volume of the chamber is no greater than 0.5 L.

8. The positioning system of claim 1, wherein:
the valve pipe defines a first flow channel within the housing extending from the outlet end of the valve pipe to an inlet end of the valve pipe;
the supply pipe is fluidly connected to a second flow channel within the housing;
the pantograph pipe is fluidly connected to a third flow channel within the housing, wherein the second flow channel and the third flow channel merge within the housing into a combined flow channel, the combined flow channel defining an outlet end for fluid attachment to a distributor device.

9. The positioning system of claim 8, wherein the first flow channel, within the housing, is fluidly isolated from the second flow channel, the third flow channel, and the combined flow channel.

10. The positioning system of claim 9, wherein the inlet end of the valve pipe and the outlet end of the combined flow channel define fluidly isolated openings on a bottom side of the housing.

11. The positioning system of claim 10, wherein the supply pipe and the pantograph pipe extend upwards from a top side of the housing, and the outlet end of the valve pipe extends out a first lateral side of the housing.

12. The positioning system of claim 11, wherein:
the housing extends from the first lateral side to a second lateral side, the chamber being positioned at the second lateral side of the housing;
the second flow channel, the third flow channel, and the combined flow channel are positioned adjacent to the chamber in a direction towards the first lateral side of the housing, wherein the manifold includes an aperture between the chamber and one of the second flow channel, the third flow channel, or the combined flow channel for fluidly connecting the chamber to said one of the second flow channel, the third flow channel, or the combined flow channel; and
the first flow channel is positioned at the first lateral side of the housing adjacent to at least one of the second flow channel, the third flow channel, or the combined flow channel.

13. The positioning system of claim 11, wherein the manifold includes a chamber outlet port extending from an interior of the chamber through to the bottom side of the housing.

14. A method of forming a positioning system for a pantograph, the method comprising:
additively manufacturing a manifold by repeatedly depositing layers of material in a stack and fusing the layers of material together to form a monolithic body of the manifold, the monolithic body including a housing, a supply pipe, a pantograph pipe, and, optionally, a valve pipe, the housing defining a chamber configured to hold a fluid, the supply pipe projecting from the housing and configured for connection to a fluid supply unit, the pantograph pipe projecting from the housing and configured for connection to an expansible device mechanically connected to the pantograph, the valve pipe, if included, projecting from the housing and configured for connection to a main valve that is actuatable to control flow of the fluid through the manifold.

15. The method of claim 14, further comprising connecting the expansible device to the pantograph pipe, wherein the expansible device is configured to raise the pantograph as the expansible device expands and lower the pantograph as the expansible device contracts.
